(19) Europäisches Patentamt
European Patent Office
Office européen des brevets

(11) EP 4 786 422 A1

(12) EUROPEAN PATENT APPLICATION

(43) Date of publication:
05.08.2026 Bulletin 2026/32

(21) Application number: 26156302.7

(22) Date of filing: 04.02.2026

(51) International Patent Classification (IPC):
C02F 9/00 (2023.01)          C02F 1/52 (2023.01)
C02F 1/56 (2023.01)          C02F 1/66 (2023.01)
C02F 103/22 (2006.01)       C02F 103/24 (2006.01)
C02F 103/28 (2006.01)       C02F 103/32 (2006.01)
C02F 1/20 (2023.01)          C02F 11/04 (2006.01)

(52) Cooperative Patent Classification (CPC):
C02F 9/00; C02F 1/20; C02F 1/5245; C02F 1/56;
C02F 1/66; C02F 11/04; C02F 2101/16;
C02F 2103/22; C02F 2103/24; C02F 2103/28;
C02F 2103/32; C02F 2103/327; C02F 2303/18

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 04.02.2025 IT 202500002100

(71) Applicant: SDG S.r.l.
36015 Schio (VI) (IT)

(72) Inventor: MARTINI, Giambattista
36015 Schio (VI) (IT)

(74) Representative: Gallo, Luca et al
Gallo & Partners S.r.l.
Via Rezzonico, 6
35131 Padova (IT)

(54) **METHOD FOR TREATING WASTE WATER WITH RECOVERY OF AMMONIA AS ALKALINE REAGENT**

(57)    A method for treating waste water, comprising a step of providing waste water (Vr) to be treated, comprising at least one organic pollutant compound (C), and a step of addition of an alkaline reagent (Ra) to the waste water (Vr) to degrade the organic pollutant compound (C) and obtain alkalinized waste water (Va).

Furthermore, the method comprises a maturation step of the alkalinized waste water (Va), in which the modified molecules (MM) coagulate to obtain mature waste water (Vm). The latter contains at least one floc-culation (F) and ammonia ($NH_3$) and/or a precursor thereof.

Furthermore, the method comprises a recovery step, in which at least part of the ammonia ($NH_3$) is removed from the mature waste water (Vm) and/or from a derivative thereof. Furthermore, at least a fraction of the recovered ammonia ($NH_3$) and/or a derivative thereof is reintroduced into the waste water (Vr) as an alkaline reagent (Ra).

Fig. 1

**Description**

Field of Application

The present invention relates to a method for treating waste water according to the preamble of independent claim 1.

The method for treating waste water in question is advantageously intended for use in the field of water treatment and depuration, or in sectors where waste water treatment is necessary, such as the treatment of water from municipal sewage, the food industry, the leather tanning industry, the paper industry, and other processes that use large quantities of water.

State of the Art

In the field of wastewater treatment and depuration, in particular for waste water containing at least one organic pollutant compound (also referred to in the jargon as "organic load"), treatment methods are known that involve the use of plants which are mainly divided into two categories: aerobic and anaerobic. In both cases, the treatment methods using these plants aim to degrade the aforesaid organic pollutant compound contained in the waste water, that is, to transform its chemical structure into a less complex one through oxidation, making it less harmful and/or easier to separate. In this way, these methods aim to reduce the quantity of the organic pollutant compound in waste water so that it can be reused for various objects, such as in agriculture, or released into the environment, such as in waterways or in the sea, without causing contamination. Generally, aerobic plants are designed to treat waste water containing a low concentration of organic pollutant compounds, which is expressed in terms of COD (*Chemical Oxygen Demand*), that is, the quantity of oxygen required for the complete chemical oxidation of the organic and inorganic compounds present in a water sample. For example, aerobic plants are designed to treat waste water in which the concentration of pollutants, expressed as COD, is generally less than 10,000 ppm.

In contrast, anaerobic plants are particularly suitable for treating waste water with a high COD load, for example, exceeding 10,000 ppm.

Both types of plants employ conventional treatment methods, such as chemical-physical and/or biological processes.

In particular, aerobic plants are typically divided into three sections, the first of which includes mechanical filters (e.g., membranes and/or tangential filters) and sedimentation tanks, specifically primary sedimentation tanks, to physically treat the wastewater in order to remove most of the suspended solids in the water. A subsequent second section comprises one or more tanks, in which the wastewater is treated chemically, for example by adding one or more reagents to precipitate the salts contained in the water, and a sedimentation tank, in which the sedimentation of solids (precipitated salts and other suspended solids) separated by gravity (or by filtration) from the rest of the water takes place. Finally, in a third section, biological treatment is carried out in an aerobic reactor, where aerobic bacteria break down the organic load in the water by metabolizing the carbon contained in the dissolved and/or suspended organic pollutant compounds in the waste water, producing carbon dioxide, water, and biomass.

In contrast, anaerobic plants include at least one anaerobic digestion section. More in detail, anaerobic digestion refers to a process in which microorganisms break down at least one organic compound under anaerobic conditions. This anaerobic digestion section includes an anaerobic digester, which contains anaerobic bacteria that act on the waste water to convert it into biogas, comprising at least carbon dioxide and methane, and a substantially liquid digestate.

In order to concentrate the organic and/or inorganic pollutant load, which does not easily settle, and send it to the digester, it is also common practice to add an alkaline reagent to the waste water to be treated, thereby causing the coagulant and flocculation of the pollutant load, with its consequent precipitation. Generally, the alkaline reagent is a strong base, such as a hydroxide (usually calcium), added in pure form or in an aqueous solution, to achieve a pH close to 10, sufficient to cause coagulation.

The methods for treating waste water of the type described so far have proven, in practice, to be not without drawbacks.

A primary drawback lies in the fact that, when flocculation is performed by adding an alkaline reagent, this method is not very effective in reducing the organic load to a satisfactory quantity. Furthermore, the flocculation requires long retention times in digesters to be disposed of.

A further drawback is that methods for treating waste water require a large quantity of chemical agents to ensure the removal of most of the organic load present in the water to be treated; these agents involve complex production processes and are costly, in particular when used in their pure form.

A further drawback is that the plants required to implement these waste water treatment methods are often highly bulky. For example, the aerobic digester alone in aerobic systems generally requires a volume of approximately 500 cubic meters.

A further drawback is that the methods for treating waste water described above are suitable for treating only one type of waste water, in particular based on the type and quantity of organic load contained in the waste water itself.

Presentation of the Invention

In this context, the problem underlying the present invention is therefore to overcome the drawbacks of the known solutions discussed above by providing a method for treating waste water that is capable of using less expensive chemical reagents and reducing the overall environmental impact.

Another object of the present invention is to provide a method for treating waste water that allows for savings in chemical reagents compared to known waste water treatment plants.

Another object of the present invention is to provide a method for treating waste water that reduces the treatment time required to remove at least one organic pollutant compound from said waste water.

Another object of the present invention is to provide a method for treating waste water that is versatile, i.e., capable of treating waste water regardless of the concentration of organic pollutant compounds contained therein.

Another object of the present invention is to provide a method for treating waste water that is capable of breaking down the pollutants present in the waste water to be treated in such a way that no further treatment is required downstream of the plant itself.

Another object of the present invention is to provide a method for treating waste water that is capable of minimizing the space occupied on the ground and the emissions of carbon dioxide, nitrogen compounds and phosphorus compared to known methods and plants.

Brief Description of the Drawings

The technical features of the invention, in accordance with the aforesaid objects, are clearly evident from the content of the claims set forth below, and the advantages thereof will become more evident in the detailed description that follows, made with reference to the attached drawings, which represent a purely illustrative and non-limiting embodiment, wherein:

- Figure 1 shows a schematic representation of the method for treating waste water according to a preferred embodiment of the present invention;
- Figure 2 shows a graph relating to the chemical equilibrium of ammonia as a function of temperature and pH.

Detailed Description of a Preferred Embodiment

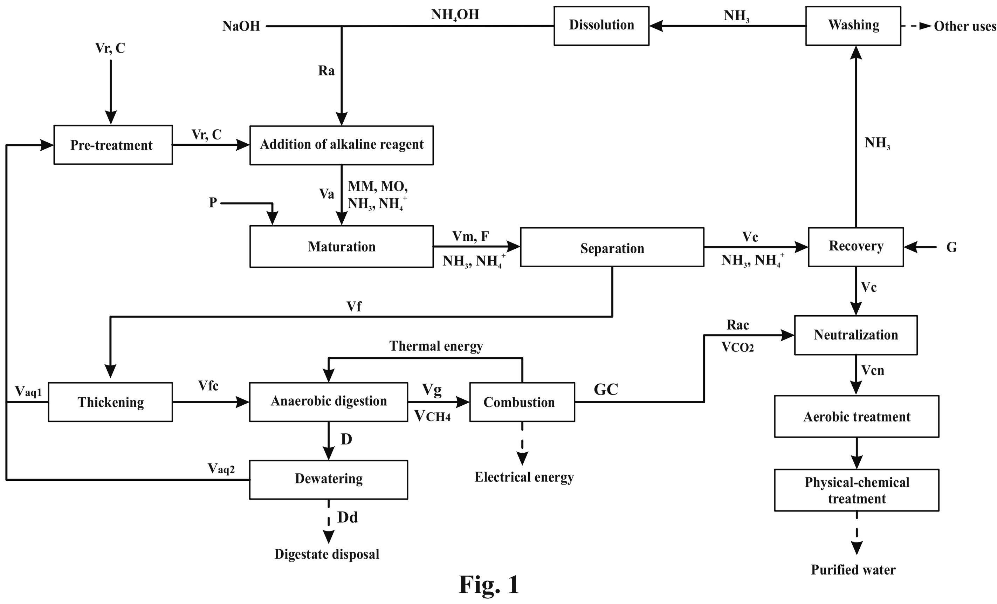

The present invention relates to a method for treating waste water, a preferred embodiment of which is schematically illustrated in Figure 1, which can be used in a plant described, for example, in European Patent EP 4424647 or European Patent EP 4424649, advantageously appropriately adapted to implement the method in question. Obviously, without departing from the scope of protection of the present invention, this method may employ any other plant for treatment of waste water suitable for the object.

The method is advantageously intended for use at sites for the treatment and cleaning of various types of waste water, in particular waste water from urban sewer discharges, or may also be used to treat waste water of different types and origins, such as that resulting from the processing of animal hides, food, or cellulose.

Hereinafter, the term "waste water" refers to an aqueous suspension with a suspended solids content of less than 50,000 mg/L, preferably less than 20,000 mg/L.

Advantageously, the waste water Vr has a pH between 5 and 10, preferably between 6 and 9, more preferably between 6 and 8.5, and even more preferably between 7 and 8.

According to the idea underlying the present invention, the method comprises a step of providing waste water Vr to be treated, wherein the waste water Vr comprises at least one organic pollutant compound C. Specific examples of waste water Vr suitable for use in the method in question (municipal waste water, waste water from the textile industry, the paper industry, the slaughterhouse industry, the dairy industry, or the tanning industry), preferably with a high organic load, and their compositions, are described in European Patent EP 4424647.

In particular, the organic pollutant compound C is any unwanted organic molecule in the waste water Vr that must be treated in order to discharge it into the environment or reuse it within an industrial facility from which the waste water Vr itself is a derivative.

For example, the organic pollutant compound C is a derivative compound from food processing, in particular of meat, fish, fruit, or vegetables, or from the dairy industry, or from paper manufacturing process, or an organic dye derived from the tanning industry.

Advantageously, the organic pollutant compound C comprises at least one between: a carbohydrate, a protein, a lipid, a surfactant, a dye, or a biological material.

For example, in the case it is a carbohydrate, the organic pollutant compound C is a polysaccharide, in particular starch or cellulose.

Furthermore, if it is a dye (or a colorant), the organic pollutant compound C comprises an acid dye, a development azo dye, a basic dye, a mordant dye, an oxidation dye, a pigment dye, a reactive dye, a cotton-substantive dye, a vat dye, or a sulfur dye. These dyes are well known in the industry and therefore they will not be described more in detail.

Obviously, without departing from the scope of the present invention, the organic pollutant compound C may be present in the waste water Vr in a free state or contained within any unicellular organism (bacteria and/or viruses) whose concentration in the waste water Vr to be treated exceeds legal limits and is capable of being reduced by a method for their treatment. Therefore, in such a case, the organic pollutant compound C is to be considered more generally as a biological material. Advantageously, the method in question allows the plant to be sized to process a quantity of organic compound C equal to or greater than 6000 AE, i.e. equal to or greater than 1200 m$^3$ per day. In fact, it has been surprisingly discovered that for such volumetric flow rates, the method allows for the production, for example, of sludge Vf from which to produce biogas Vg in a quantity sufficient to generate enough energy to self-sustain the plant without the need to use fossil fuels. The method according to the invention comprises a step of adding an alkaline reagent Ra to the waste water Vr to obtain alkalinized waste water Va, in which the at least one organic pollutant compound C is transformed into modified molecules MM by the action of the alkaline reagent Ra. In particular, the modified molecules MM are hydrolyzed and/or denatured molecules. Advantageously, the pH of the alkalinized waste water Va is between 10 and 14, preferably between 11 and 14, more preferably between 11 and 13, and even more preferably between 11.5 and 13, for example approximately 12.2.

Obviously, the pH of the alkalinized waste water Va also varies depending on the temperature of such waste water and is appropriately higher when the temperature of the waste water Vr is lower, and vice versa.

More in detail, during the addition step of the alkaline reagent Ra, depending on the nature of the organic pollutant compound C, the molecules constituting the latter undergo structural changes and/or break down into molecules of lower molecular weight.

For example, the organic pollutant compound C can react with the alkaline reagent Ra via an alkali hydrolysis reaction, such that in the basic environment formed following the addition of the alkaline reagent Ra, the organic compound C breaks down into several different shorter-chain molecules.

Alternatively or in combination, the organic pollutant compound C may react with the alkaline reagent Ra without altering the length of its chain, but by breaking hydrogen bonds and/or salt bridges.

Some specific examples of the modification of specific organic pollutant compounds C due to the alkalization of waste water Vr are described in European Patent EP 4424647 and will therefore not be further described below.

The method further comprises a maturation step of the alkalinized waste water Va for a maturation time tm during which the modified molecules MM coagulate to obtain mature waste water Vm containing at least one flocculation F of the modified molecules MM.

Preferably, the maturation time tm is between 3 minutes and 30 minutes. During this maturation time tm, it is preferable to agitate the alkalinized waste water Va in order to maximize the probability of collision between the modified molecules M dispersed in the aforesaid alkalinized waste water Va. In particular, the modified molecules M form intermolecular bonds with one another, for example through polycondensation reactions, generating flocculation F that is insoluble in the alkalinized waste water Va.

Advantageously, the maturation step involves the addition of at least one polyelectrolyte P to the alkalinized waste water Va to accelerate the formation of flocculation F.

The mature waste water Vm further comprises ammonia NH$_3$ and/or a precursor thereof. Advantageously, in the maturation step, the mature waste water Vm comprises at least the precursor of ammonia NH$_3$, wherein the precursor is the ammonium ion NH$_4^+$.

Advantageously, the modified molecules MM comprise at least an organic fraction MO (which forms the flocculation F during the maturation step) and ammonia and/or its precursor. In particular, ammonia and/or its precursor are formed during the maturation step and/or the preceding addition step of the alkaline reagent Ra, in any case preferably by the action of the latter. More in detail, in the case of nitrogen-containing organic pollutant compounds C, the alkalinization of the waste water Vr ensures that the hydrolysis reactions of these molecules release nitrogen in the form of ammonia, separating it from the organic fraction MO.

Obviously, ammonia and/or its precursor may already be present in the waste water Vr prior to treatment.

Advantageously, the method further comprises a step of separating the mature waste water Vm into at least clarified water Vc and sludge Vf. In this step, the flocculation F is mainly contained in the sludge Vf, and the ammonia NH$_3$ and/or its precursor is mainly contained in the clarified water Vc.

Obviously, without departing from the scope of the invention, the separation step may be performed simultaneously with the maturation step.

According to the invention, the method further comprises a recovery step, in which at least part of the ammonia NH$_3$ is removed from the mature waste water Vm and/or a derivative thereof.

In particular, in the recovery step, the derivative of the mature waste water Vm comprises the clarified water Vc. Preferably, the recovery step is performed on the latter.

Advantageously, the recovery step is carried out by stripping and, for example, involves the injection of a gas stream G into the mature waste water Vm and/or its derivative (i.e., the clarified water Vc) to extract at least a part of the ammonia $NH_3$, thereby obtaining a gas mixture MG comprising at least the aforesaid part of ammonia $NH_3$.

In particular, the injection of gas stream G during stripping is carried out by bubbling it into mature waste water Vm and/or its derivative, or in a percolation tower with countercurrent spraying of mature waste water Vm and/or its derivative. In the latter case, gas stream G may comprise air and/or steam.

Alternatively, the recovery step can be carried out by means of a controlled chemical reaction at high pH and room temperature.

In particular, during the recovery step, the ammonium ion $NH_4^+$ is converted into gaseous ammonia $NH_3$, which is removed from the mature waste water Vm and/or its derivative.

More in detail, the chemical reaction illustrating the process is described by Equation I below:

$$NH_4^+ + OH^- \rightarrow NH_3(g) + H_2O \qquad \text{(I)}$$

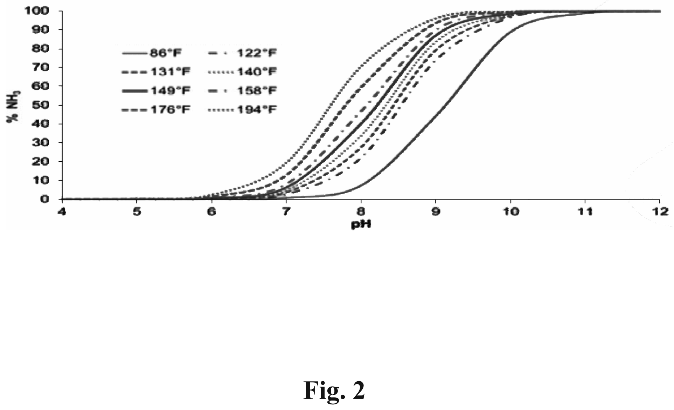

As illustrated in the graph in Figure 2, in this high-alkalinity environment (which would normally be in chemical equilibrium), the equilibrium is shifted toward the formation of gaseous ammonia, which is subsequently advantageously recovered using stripping technologies, as described above. Advantageously, the conversion yield is equal to or greater than 90% of the ammonium ion $NH_4^+$ content.

In particular, the chemical equilibrium between ammonia and ammonium ions in water described by this reaction has an equilibrium constant (Kb) for ammonia at 20 °C equal to $1,8 \cdot 10^{-5}$. Advantageously, the theoretical fraction of molecular ammonia ($fNH_3$) is determined by Equation II:

$$fNH_3 = 1/(1 + 10^{pKa-p}) \qquad \qquad \text{(II)}$$

where

$$pKa = 14 - log(Kb) = 14 - 4,74 = 9,26 \qquad \text{(III)}$$

Therefore, at a pH equal to 12 and a temperature of 20 °C, a theoretical quantity of molecular ammonia ($fNH_3$) of approximately 99.82% (relative to the sum of molecular ammonia and ammonium ions) is obtained, which can be recovered by stripping.

Therefore, the recovery step is preferably carried out at room temperature.

Furthermore, in accordance with the underlying idea of the present invention, the alkaline reagent Ra comprises at least a fraction of the ammonia $NH_3$ (obtained in the recovery step) and/or a derivative thereof.

In fact, by using ammonia or its derivative, it has surprisingly been found that this byproduct of the treatment of waste water is extremely efficient as an alkaline reagent for alkalinizing the waste water to be treated; furthermore, very high pH levels are capable of structurally modifying the organic pollutant compounds, yielding modified molecules MM that are more easily attacked by anaerobic bacteria.

In particular, the use of recovered ammonia as an alkaline reagent Ra makes it possible to reduce the need for other, more expensive reagents, such as sodium hydroxide (NaOH) and potassium hydroxide (KOH), or other types of alkalizing agents such as biomass combustion ash. Obviously, without departing from the scope of the present invention, in the case where the recovered ammonia is insufficient to bring the waste water Vr to the desired pH, it is still possible to use other known reagents.

In such a case, the alkaline reagent Ra therefore also comprises alkali or alkali earth hydroxides, albeit advantageously in much smaller quantities than in known processes.

Advantageously, the alkaline reagent Ra comprises a strong base selected from: sodium hydroxide, potassium hydroxide, calcium hydroxide, barium hydroxide, lithium hydroxide, magnesium hydroxide, and mixtures or compounds thereof. Preferably, the alkaline reagent Ra comprises sodium hydroxide or potassium hydroxide.

Biomass combustion ash containing one or more of the aforementioned alkaline reagents Ra may also be used, for example, in accordance with patent IT 102024000001350.

In accordance with a preferred embodiment of the invention, the ammonia $NH_3$ derivative in the alkaline reagent Ra is ammonium hydroxide $NH_4OH$.

More in detail, the method comprises a dissolution step, following the recovery step, in which at least a fraction of the ammonia $NH_3$ is introduced into an aqueous solution to obtain an alkaline solution containing ammonium hydroxide $NH_4OH$.

In particular, ammonium hydroxide $NH_4OH$ is an aqueous solution of gaseous ammonia $NH_3$ dissolved in water. It is not a stable chemical compound, but a strongly alkaline mixture in equilibrium between dissolved ammonia and ammonium ions $NH_4^+$ and hydroxide ions $OH^-$. More in detail, when gaseous ammonia is dissolved in water, the equilibrium reaction described in the following Equation IV occurs:

$$NH_3(g) + H_2O (l) \rightleftharpoons NH_4OH (aq) \rightleftharpoons NH_4^+ (aq) + OH^- (aq) \qquad (IV)$$

Consequently, the alkaline solution containing ammonium hydroxide $NH_4OH$ is capable of increasing the pH of waste water.

Preferably, the dissolution step occurs at a temperature equal to or lower than room temperature (20 °C), as lower temperatures favor the solubility of ammonia.

Furthermore, the dissolution step takes place at a pressure equal to or greater than atmospheric pressure, since ammonia is highly volatile.

Advantageously, the dissolution step is carried out using a bubbler or a spray column, so as to pass a stream of gaseous ammonia through water. In particular, it is preferable to use tanks made of corrosion-resistant material (stainless steel or plastic) and systems for controlling the temperature, pressure, and flow rate of the ammonia stream.

Advantageously, the concentration of ammonia in the alkaline solution is between 5 and 30% by weight, preferably between 8 and 28% by weight, more preferably between 15 and 28% by weight, and even more preferably between 20 and 26% by weight.

In particular, the alkaline solution containing ammonium hydroxide $NH_4OH$ has a pH between 9 and 12, preferably between 9.5 and 12, even more preferably between 9.5 and 11.5, and most preferably between 10 and 11.5.

Advantageously, the method further comprises, following the recovery step and preferably prior to the dissolution step, a washing step, in which the gaseous mixture MG containing the ammonia fraction is subjected to scrubbing to remove any impurities.

Alternatively or in combination, an excess fraction of ammonia may be used in other ways and for other objects. For example, it is possible to react an excess fraction of ammonia in the gaseous mixture MG with an acid aqueous solution, preferably a solution of nitric acid or sulfuric acid, to obtain at least one ammonium salt.

In this way, it is possible to produce one or more ammonium salts, such as ammonium nitrate or ammonium sulfate, which can be used in the fertilizer industry. Another known application of the recovered excess ammonia is as a hydrogen carrier. Obviously, other applications will also be possible.

Therefore, with this preferred embodiment of the method in question, it is possible to advantageously obtain a fraction of ammonia that is continuously recirculated as the alkaline reagent Ra and an excess fraction, derived substantially from the new waste water Ra introduced into the plant, which can be used for other objects. This contributes to creating a plant that is substantially capable not only of being self-sustaining but also of generating useful products in other fields.

Since the recovered ammonia fraction is generally not initially present in sufficient quantity to alkalinize the waste water Vr to the desired pH, the method further advantageously includes an accumulation step, in particular only at the start-up of the plant. During this accumulation step, at least a fraction of the ammonia $NH_3$ removed during the recovery step is accumulated before being reintroduced into the waste water Vr during the addition of the alkaline reagent Ra. During this accumulation step, the predominant alkaline reagent Ra is a hydroxide of an alkali or alkali earth metal, as indicated above.

In particular, once the appropriate quantity of ammonia fraction is reached, the latter becomes the predominant alkaline reagent Ra and will advantageously be able to substantially sustain itself and recirculate in the aforesaid steps of the method (i.e., the steps appropriately provided for between: addition of the alkaline reagent, maturation, separation, recovery, washing, dissolution).

Advantageously, the method includes a neutralization step for the clarified water Vc, in which the pH of the clarified water Vc is lowered using at least one acid reagent Rac to obtain neutral clarified water Vcn.

Preferably, the acid reagent Rac comprises, and preferably consists of, carbon dioxide to form carbonates through reaction with residual alkaline reagent Ra and modified molecules MM.

Advantageously, the neutralization step of the clarified water Vc is performed after the ammonia recovery step, since the latter, as seen previously, has a higher yield in an alkaline environment. Furthermore, the recovery step is advantageously carried out prior to other treatment steps of the clarified water Vc to prevent the oxidation of ammonia dissolved in water, first to nitrites and nitrates and subsequently to nitrogen, which could occur, for example, during a subsequent aerobic digestion process.

In accordance with the preferred embodiment of the invention, the method comprises a sludge thickening step Vf, in which at least an alkaline first recovery liquid $Vaq_1$ is removed from the sludge Vf by thickening to obtain concentrated sludge Vfc.

In particular, the first recovery liquid $Vaq_1$ comprises water and at least a fraction of the alkaline reagent Ra that has not reacted.

Preferably, the first recovery liquid $Vaq_1$ comprises a liquid content (primarily water) of between 60 and 70% by volume relative to the total liquid content of the sludge Vf, and the concentrated sludge Vfc preferably comprises a liquid content of between 30 and 40% by volume relative to the total liquid content of the sludge Vf.

Preferably, the first recovery liquid $Vaq_1$ also comprises a percentage of flocculation F between 1 and 5% by volume relative to the total volume of the solid content of the sludge Vf, and the concentrated sludge Vfc preferably comprises a percentage of flocculation F between 95 and 99% by volume relative to the total volume of the solid content of the sludge Vf.

Advantageously, the method comprises a first step of recirculation of the recovery liquid $Vaq_1$, in which the first recovery liquid $Vaq_1$ is introduced into the waste water Vr.

In this way, as described above, it is advantageously possible to recover an alkaline, recyclable liquid capable of raising the pH of the waste water Vr.

Advantageously, the method comprises a step of digestion of the sludge Vf or the concentrated sludge Vfc using an anaerobic digester to produce at least one biogas Vg and a digestate D, wherein the biogas Vg comprises at least a methane fraction $V_{CH4}$ and possibly contaminants, such as carbon dioxide.

More in detail, in a manner known per se, the digestion step involves the use of anaerobic bacteria, advantageously arranged within the anaerobic digester and maintained in an environment with controlled temperature and pH.

In particular, the concentrated sludge Vfc and/or the sludge Vf are introduced at a pH preferably between 7.5 and 9, more preferably between 7.5 and 8, into the anaerobic digester, since the anaerobic bacteria present within the anaerobic digester require substantially neutral or near-neutral pH conditions to metabolize the concentrated sludge.

To this object, in particular if the pH of the Vfc concentrated sludge and/or Vf sludge arriving from the clarification unit is excessively alkaline, such as to compromise the bacterial activity of the methanogenic bacteria, the method advantageously includes a partial neutralization step (not shown in Figure 1), in which the pH of the sludge Vf or the concentrated sludge Vfc is reduced, as described, for example, in European Patent EP 4424647 or Italian Patent IT 102024000001350. In particular, the partial neutralization step is performed, respectively, following the separation step or the thickening step.

Advantageously, the pH of the concentrated Vfc sludge and/or Vf sludge decreases during the digestion step through a reaction with at least part of the carbon dioxide produced in the anaerobic digester, along with the methane fraction $V_{CH4}$.

Advantageously, the kinetics of the reactions of metabolization of flocculation F by anaerobic bacteria are faster than the kinetics of anaerobic digestion in traditional methods, since flocculation F comprises modified molecules MM (in particular their organic fraction MO), in particular hydrolyzed and/or denatured, and not the organic pollutant compound C, which would require a longer digestion time to be metabolized. In other words, thanks to the strong initial alkalization of the waste water Vr using the recovered ammonia fraction, the resulting modified molecules, which subsequently formed the flocculation present in the sludge Vf or the concentrated sludge Vfc, are much more readily attacked by anaerobic bacteria, thereby accelerating the digestion step.

In this way, the method for treating waste water Vr is capable of reducing the treatment time for at least one organic pollutant compound C initially present in said waste water Vr. Furthermore, it is possible to reduce the residence time of the sludge Vf or the concentrated sludge Vfc in the anaerobic digester and to reduce the size of the latter.

In accordance with the preferred embodiment of the invention, the method further comprises a dewatering step of the digestate D, in which the spent digestate D, i.e., unable to produce further biogas, is extracted from the anaerobic digester and dewatered to produce a dewatered digestate Dd. In the dewatering step, a second recovery liquid $Vaq_2$ is also obtained, which contains residual nitrogen.

Advantageously, the method comprises a second step of recirculation of the second recovery liquid $Vaq_2$, in which the second recovery liquid $Vaq_2$ is introduced into the waste water Vr.

In this way, the residual ammonia nitrogen can be reintroduced into the waste water Vr, helping to increase the efficiency of ammonia recovery.

Preferably, the method also includes a step for disposing of the digestate D or the dewatered digestate Dd, in which at least one of these is sent to a disposal facility or, alternatively, is incinerated to produce energy for the plant's self-sufficiency.

Optionally, the method includes a biogas purification step, not shown in Figure 1, to remove any contaminants from the biogas. In particular, this purification step is advantageously performed prior to the combustion of the methane fraction $V_{CH4}$ of biogas Vg.

This prevents such contaminants from being burned together with the methane fraction $V_{CH4}$, thereby avoiding their release into the atmosphere in the form of, for example, nitrogen oxides or chlorinated compounds (such as dioxins).

Advantageously, the purification step involves treating the biogas by bringing it into contact with at least a part of the clarified water Vc, as described in European Patent EP 4424649, for example by bubbling it through the aforesaid clarified water Vc or passing it through a scrubbing tower in countercurrent flow with respect to the clarified water Vc itself.

Alternatively, the purification step may involve passing the biogas through a condensation column to remove water vapor and a subsequent acid scrubbing to remove at least the ammonia. Furthermore, the purification step may involve a basic scrubbing to remove any hydrogen sulfide and other acid compounds contained in the biogas.

Advantageously, the method further comprises a combustion step, in particular in a cogenerator (comprising, for example, a thermal power plant or a diesel/gas engine), of at least the methane fraction $V_{CH4}$ of the biogas Vg to produce at least electrical energy and a combustion gas GC, comprising at least a carbon dioxide fraction $V_{CO2}$, and, preferably, a water vapor fraction. Advantageously, at least the carbon dioxide fraction $V_{CO2}$, and preferably the combustion gas GC, is added to the clarified water Vc as an acid reagent Rac in the neutralization step to lower its pH. Furthermore, advantageously, the second carbon dioxide fraction, and preferably the combustion gas GC, is added to the sludge Vf or to the concentrated sludge Vfc in the partial neutralization step, if provided for, to lower its pH.

Obviously, without departing from the scope of the present invention, the carbon dioxide fraction $V_{CO2}$ separated from the combustion gas GC can advantageously be used for other objects (e.g., in the carbonated beverage industry, following appropriate treatment).

Advantageously, in particular in cases where the quantity of carbon dioxide is insufficient for neutralization or partial neutralization, the neutralization or partial neutralization steps of the method may also involve the use as an acid reagent Rac of carbon dioxide from other external production sites, such as synthetic cryogenic carbon dioxide or carbon dioxide from other recovery sources.

It is also possible to add acid reagents Rac other than carbon dioxide, in particular a strong acid, such as sulfuric acid. In particular, such acid reagent Rac other than carbon dioxide may be added in addition to the carbon dioxide itself or in its place.

According to a preferred embodiment of the present invention, the method comprises a step of aerobic treatment of the neutral clarified water Vcn.

During this step, the neutral clarified water Vcn is treated with aerobic bacteria, preferably in an aerobic reactor, wherein the aerobic bacteria metabolize any residues of the organic pollutant compound C, of modified molecules MM, of the flocculation F, and/or of any other undesirable residual compounds to be eliminated. In particular, the aerobic bacteria produce biomass, which settles at the bottom of the aerobic reactor.

Furthermore, the method advantageously includes a step of physical-chemical treatment of the neutral clarified water Vcn (preferably previously treated in the aerobic treatment stage) using a treatment selected from double-exchange reaction, filtration, disinfection, and sedimentation.

In particular, the physical-chemical treatment is intended to eliminate residual pollutants and aerobic bacteria remaining in the neutral clarified water Vcn following the aerobic treatment.

Of course, without departing from the scope of the present invention, the method may also comprise only one of the aerobic treatment step and the physical-chemical treatment step.

At the end of these final steps, purified water is thus advantageously obtained.

The method object of the present invention advantageously allows the concentration of the organic pollutant compound C to be reduced below the desired limits regardless of the initial concentration of the organic pollutant compound C.

Preferably, the concentration of the organic pollutant compound C at the plant outlet is less than 160 mg/l, and even more preferably less than 100 mg/l in COD.

In fact, depending on the type of waste water to be treated, more or less sludge Vf will be obtained depending on the concentration of the organic pollutant compound C, and, consequently, a more or less elevated quantity of biogas depending on the mass of sludge Vf produced.

The invention thus conceived therefore achieves the intended objects.

**Claims**

1. Method for the treatment of waste water, which comprises the following operating steps:

   - providing waste water (Vr) to be treated, said waste water (Vr) comprising at least one organic pollutant compound (C);
   - addition of an alkaline reagent (Ra) to said waste water (Vr) to obtain alkalinized waste water (Va), said at least one organic pollutant compound (C) being transformed into modified molecules (MM) by the action of said alkaline reagent (Ra); wherein the pH of said alkalinized waste water (Va) is between 10 and 14;
   - maturation of said alkalinized waste water (Va) for a maturation time (tm) during which said modified molecules (MM) coagulate to obtain mature waste water (Vm) containing at least one flocculation (F) of said modified molecules (MM); wherein said mature waste water (Vm) further comprises ammonia ($NH_3$) and/or a precursor thereof;
   said method being **characterized by the fact that** it further comprises a recovery step, in which at least part of

said ammonia ($NH_3$) is removed from said mature waste water (Vm) and/or a derivative thereof;
wherein said alkaline reagent (Ra) comprises at least a fraction of said ammonia ($NH_3$) and/or a derivative thereof.

2. A method for treating waste water according to claim 1, **characterized in that** it comprises a step of separating said mature waste water (Vm) into at least clarified water (Vc) and sludge (Vf), said flocculation (F) being mainly contained in said sludge (Vf) and said ammonia ($NH_3$) and/or its precursor being mainly contained in said clarified water (Vc); wherein, in said recovery step, the derivative of said mature waste water (Vm) comprises said clarified water (Vc).

3. A method for treating waste water according to claim 1 or 2, **characterized in that** the process comprises a neutralization step of said clarified water (Vc), in which the pH of said clarified water (Vc) is lowered using at least one acid reagent (Rac) to obtain neutral clarified water (Vcn).

4. A method for treating waste water according to any of the preceding claims, **characterized in that**, in said maturation step, said mature waste water (Vm) comprises at least said ammonia precursor ($NH_3$), said precursor being ammonium ion ($NH_4^+$),
wherein, in said recovery step, said ammonium ion ($NH_4^+$) is converted into said ammonia ($NH_3$) in the gaseous state, which is removed from said mature waste water (Vm) and/or its derivative.

5. A method for treating waste water according to any of the preceding claims, **characterized in that** said derivative of ammonia ($NH_3$) in said alkaline reagent (Ra) is ammonium hydroxide ($NH_4OH$).

6. A method for treating waste water according to claim 5, **characterized in that** it comprises a dissolution step, following said recovery step, in which said at least one fraction of ammonia ($NH_3$) is introduced into an aqueous solution to obtain an alkaline solution containing said ammonium hydroxide ($NH_4 OH$).

7. A method for treating waste water according to claim 6, **characterized in that** the concentration of ammonia is between 5 and 30% by weight, preferably between 8 and 28% by weight.

8. A method for treating waste water according to claim 6 or 7, **characterized in that** the alkaline solution containing said ammonium hydroxide ($NH_4OH$) has a pH of between 9 and 12, preferably between 9.5 and 12.

9. A method for treating waste water according to any of the preceding claims, **characterized in that** it further comprises an accumulation step, in which said at least one fraction of ammonia ($NH_3$) removed in said recovery step is accumulated before being reintroduced into the waste water (Vr) in said addition step of an alkaline reagent (Ra).

10. A method for treating waste water according to any of the preceding claims, **characterized in that** the pH of said alkalinized waste water (Va) is between 11 and 14.

11. A method for treating waste water according to any of the preceding claims, **characterized in that** said modified molecules (MM) are hydrolyzed and/or denatured molecules;
wherein said modified molecules (MM) comprise at least:

   - an organic fraction (MO), which in said maturation step forms said flocculation (F); and
   - ammonia ($NH_3$) and/or its precursor.

12. A method for treating waste water according to any of the preceding claims, **characterized in that** said alkaline reagent (Ra) further comprises alkali or alkaline earth hydroxides.

Fig. 1

**Fig. 2**

**Europäisches Patentamt**
**European Patent Office**
**Office européen des brevets**

# EUROPEAN SEARCH REPORT

EP 26 15 6302

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 119 118 429 A (HUBEI LANGRUN ENVIRONMENTAL PROTECTION TECH CO LTD) 13 December 2024 (2024-12-13) * paragraphs [0001], [0050] - [0056], [0058], [0060] - [0065], [0079], [0081] * ----- | 1-12 | INV. C02F9/00 ADD. C02F1/52 C02F1/56 C02F1/66 |
| A | CN 110 668 600 A (ZHEJIANG SCI TECH UNIV SHANGYU INDUSTRIAL TECHNOLOGY INSTITUTE CO LTD) 10 January 2020 (2020-01-10) * the whole document * ----- | 1-12 | C02F103/22 C02F103/24 C02F103/28 C02F103/32 C02F1/20 |
| A | EP 4 467 520 A1 (PRUEF UND FORSCHUNGSINSTITUT PIRMASENS E V [DE]) 27 November 2024 (2024-11-27) * the whole document * ----- | 1-12 | C02F11/04 |

**TECHNICAL FIELDS SEARCHED (IPC)**

C02F

The present search report has been drawn up for all claims

| Place of search | Date of completion of the search | Examiner |
|---|---|---|
| The Hague | 7 April 2026 | Fiocchi, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 6302

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2026

| Patent document cited in search report | | Publication date | Patent family member(s) | Publication date |
|---|---|---|---|---|
| CN 119118429 | A | 13-12-2024 | NONE | |
| CN 110668600 | A | 10-01-2020 | NONE | |
| EP 4467520 | A1 | 27-11-2024 | DE 102023113927 A1 | 28-11-2024 |
| | | | EP     4467520 A1 | 27-11-2024 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4424647 A
- EP 4424649 A

- IT 102024000001350